# EUROPÄISCHE PATENTSCHRIFT

(11) **EP 2 885 362 B1**
(45) Veröffentlichungstag und Bekanntmachung des Hinweises auf die Patenterteilung: **26.10.2016**
(21) Anmeldenummer: 13745357.7
(22) Anmeldetag: 03.08.2013
(51) Int. Cl.: C09J 123/14

(54) **SCHWERENTFLAMMBARE TEPPICHRÜCKSEITENBESCHICHTUNG**
FLAME-RESISTANT COATING FOR THE REAR SIDE OF A CARPET
ENDUCTION À INFLAMMATION DIFFICILE POUR ENVERS DE TAPIS

(30) Priorität: 16.08.2012 DE 102012016171; 04.09.2012 DE 102012017469
(43) Veröffentlichungstag der Anmeldung: 24.06.2015
(73) Patentinhaber: Clariant International Ltd, 4132 Muttenz (CH)
(72) Erfinder: HERRLICH, Timo, 86444 Affing (DE); STEIB, Christian, 86356 Steppach (DE); LANG, Andreas, 86154 Augsburg (DE)
(74) Vertreter: Mikulecky, Klaus
(86) Internationale Anmeldenummer: PCT/EP2013/002332
(87) Internationale Veröffentlichungsnummer: WO 2014/026741

(56) Entgegenhaltungen:
- EP-A1- 0 752 458
- EP-A1- 1 788 056
- US-A- 4 169 082

## Beschreibung

Die Erfindung betrifft eine flammhemmend ausgerüstete Zubereitung zum Verkleben bzw. Fixieren von Textilflächengebilden (z. B. Bodenbelagskonstruktionen, Woven, Nonwoven, Tuftwaren, insbesondere Teppiche) und Textilverbunden (Textillaminierungen) und die mit dieser Zubereitung ausgerüsteten Erzeugnisse.

Unter "textilen Flächengebilden" werden in diesem Zusammenhang aus Fasern oder Filamenten gebildete Flächengebilde verstanden, einschließlich aller Arten von Faservliesen (gebundene, ungebundene, vernadelte, unvernadelte Vliese), Fasermatten, Vorhangstoffe, Wärmedämmstoffe, Akustikdämmstoffe, Auslegeware (Teppichböden), Textiltapeten, Funktionsbekleidung (z. B. elektrisch beheizte Motorad-, Skibekleidung) textile Kfz- und Flugzeuginnenausstattung (z. B. Sitzbezüge, Dachbahnen) und dergleichen.

Die Beschichtung textiler Flächengebilde mit Flammschutzmassen ist ein technisch oft aufwendiger Prozess, der in unterschiedlichster Weise durchgeführt werden kann. Je nach Prozess werden verschiedene Trägersysteme für das flammhemmende Material bevorzugt (z. B. Lösung, Dispersion, Emulsion, Feststoff) die wiederum mit unterschiedlichen Techniken aufgetragen werden (z. B. Sprühen, Rakeln, Beflockung von Schmelzen). Für gewöhnlich führt die Beschichtung der Textilflächengebilde mit Flammschutzmittel durch die genannten Techniken zu einer erheblichen Erhöhung des Gewichts des Verbundes. Weiterer Nachteil bei der Herstellung und Verarbeitung derartiger Massen ist auch, dass oft organische Lösungsmittel verwendet werden, die hohen apparativen Aufwand zur Compoundierung als auch zur Lösungsmittelrückgewinnung erfordern, und der Verarbeitung (Explosionsschutz) und Anwendung (VOC - volatile organic compounds) zusätzliche toxikologische und sicherheitstechnische Probleme hinzufügen.

Die derzeitigen in der Praxis am häufigsten angewandten Beschichtungstechnologien setzen als Bindemittel für die Fixierung von Textilflächengebilden, insbesondere bei Teppichen, aber auch bei Nonwoven, Webware und Tuftware Systeme auf Basis von wässrigen Latexdispersionen, Polyurethan oder Polyacrylaten ein. Die Verwendung von Latex und Polyurethan als Beschichtungsmaterial führt außerdem aufgrund der höheren Dichte dieser Bindemittelsysteme im Vergleich zu Polyolefinen zu einem höheren Gesamtgewicht und durch die nicht reversible Aushärtung der Bindemittel zu einem nur unvollständig werkstofflich oder rohstofflich recyclingfähigen Endprodukt. Daneben sind prozessbedingt, durch hohen Wasserverbrauch, lange Trocknungsstrecken und damit verbundenem Energieverbrauch, die Beschichtung mit wässrigen Latexdispersionen oder Polyurethanen auf lange Sicht raum- und kostenintensiver als moderne Beschichtungstechnologien auf Basis von Heißschmelzklebemassen als Bindemittel.

Der Einsatz von Polymeren, insbesondere von Polyolefinen (PE, PP) als Bindemittel zur Fixierung von Textilflächengebilden führt zwar zu einer deutlichen Gewichtsreduktion, setzt jedoch aufgrund der höheren Brennbarkeit der Polyolefine als Bindemittel besonders hohe Anforderungen an die Flammschutzausrüstung selbiger.

Es ist bereits bekannt, dass die Ausrüstung von Textilien sowie von polymeren Bindemitteln mit Flammschutzmitteln zu einer höheren Flammfestigkeit und einer deutlichen Verlangsamung der Brandausbreitung in den Flächengebilden führt. Entsprechende Flammschutzmittel für Textilien können in Kirk-Othmer Encyclopedia of Chemical Technology, Wiley, 2000, Flame Retardants for Textiles sowie für Polymere in Ullmann's Encyclopedia of Industrial Chemistry, Vol 5, 2000, Plastics, Additives, Chap. 6 nachgeschlagen werden. Eine flammhemmende Ausrüstung besteht aus einem oder mehreren Flammschutzmitteln und eventuell weiteren Komponenten wie Trägermaterialien oder Substanzen mit zusätzlichen Funktionen. Flammschutzmittel können sowohl durch chemische Reaktionen als auch durch physikalische Effekte auf den Brand wirken. Flammschutzmittel, die in der kondensierten Phase wirken, können durch Wärmeableitung, Verdunstung, Verdünnung oder durch endotherme Reaktionen dem System Energie entziehen. Intumeszenz-Systeme schützen das Polymer vor weiterer Pyrolyse durch Ausbildung einer voluminösen, isolierenden Schutzschicht durch Verkohlung und gleichzeitiges Aufschäumen. Zudem muss die Viskosität und damit eng verbunden die Temperatur der Schmelze eine Bildung kleiner Blasen begünstigen und somit die Bildung eines mikrozellulären Systems ermöglichen. Zu dieser wichtigen Gruppe der Intumeszenz-Flammschutzmittel gehören z. B. Mischungen aus Ammoniumpolyphosphat, Melamin und Dipentaerythrit (verkohlt) oder Blähgraphit. Blähgraphite werden durch Umsetzung von Graphit mit rauchender Salpetersäure oder konzentrierter Schwefelsäure durch Einlagerung von NOₓ bzw. SOₓ in die Zwischengitterebene des Graphites hergestellt. Bei Hitzeeinwirkung expandiert der Blähgraphit und bildet eine Intumeszenzschicht auf der Materialoberfläche.

Den größten Volumenanteil an Flammschutzmitteln stellen allerdings die anorganischen Metallhydroxide von Aluminium oder Magnesium dar. Diese wirken ebenfalls in der kondensierten Phase sind allerdings nicht dazu befähigt eine Schutzschicht auszubilden. Ihre Wirkung besteht in ihrer endothermen Zersetzung unter Freisetzung von Wasser. Dadurch kommt es zu einer Verdünnung des Brandgases und einer Abkühlung der Polymere. Dabei zersetzt sich Al(OH)₃ bei 230°C mit einem Energieverbrauch von 75 kJ/mol, während Mg(OH)₂ erst bei 340°C und einem Energieverbrauch von 81 kJ/mol abbaut. Man benötigt allerdings 40 - 60% Masseprozent dieser anorganischen Additive um annähernd effizient Flammschutz zu betreiben.

DE 3813252 beschreibt thermisch expandierende Brandschutzmassen, die Blähgraphit enthalten und zu deren Herstellung eine wässrige Latexdispersion verwendet wurde. Die Beschichtung von textilen Flächengebilden mit einer solchen Dispersion führt allerdings zu längeren raum- und energieintensiven Trocknungszeiten und zu einer deutlichen Erhöhung des Gewichts der zu beschichtenden Flächengebilde sowie dem Nachteil einer fehlenden "End of Life" Option hinsichtlich Rohstoff-Recycling-Fähigkeit.

In EP 0752458 wird ein Verfahren zur flammhemmenden Ausrüstung von im Wesentlichen aus brennbaren Fasern hergestellten textilen Flächengebilden beschrieben, bei dem Blähgraphit in Form diskreter, haftender Flocken auf mindestens eine Oberfläche des Flächengebildes (Anm. Rückseitenbeschichtung) aufgebracht wird. Die flammhemmende Ausrüstung soll neben der Erhöhung der Flammfestigkeit und einer starken Verzögerung der Brandausbreitung bei gleichzeitiger Reduzierung der Rauchgasdichte im Brandfall auch zu einer nur verringerten Gewichtserhöhung der Flächengebilde führen. Die Erfinder sind sich offensichtlich sehr wohl bewusst, dass die Applizierbarkeit von Mischungen in ihren Formulierungen nicht funktioniert und trennen deshalb die einzelnen Komponenten (Bindemittel, Flammschutzmittel) in der prozesstechnischen Anwendung. Die Dispergierung von Flammschutzmitteln in hochviskosen Polymersystemen ist außerdem zu schlecht um gleichmäßige Flammschutzwirkung zu erzielen. Das beschriebene Verfahren ist dadurch gekennzeichnet, dass die Oberflächen des Flächengebildes mit einem flüssigen Bindemittel besprüht werden, dann die flammhemmend wirksamen Blähgraphitflocken auf die besprühte Oberfläche gestreut werden und schließlich die beflockte Oberfläche erneut mit dem flüssigen Bindemittel besprüht wird. Weiter wird beschrieben, dass die Auftragung des Blähgraphits auf die Oberfläche in Form einer Dispersion oder Suspension erfolgen kann. Nachteil des beschriebenen Verfahrens ist die aufwendige schrittweise Auftragung des Flammschutzes und seiner Komponenten was zu einer erhöhten Prozesskomplexität führt. Es wird auch die Verwendung von Dispersionen oder Suspensionen beschrieben, was eine Trocknung des textilen Flächengebildes erfordert und damit die Produktionsgeschwindigkeit vermindert.

Die Verwendung von Heißschmelzklebemassen auf Polymerbasis leidet insgesamt an einer zu hohen Viskosität der polymeren Komponenten dieser Bindemittel, so dass Zuschläge von Flammschutzmitteln und anderen Additiven, welche in aller Regel die Viskosität weiter erhöhen, die Verarbeitbarkeit stark behindern. Der Einsatz von niederviskosen wachsartigen Polyolefinen als Bindemittel führt im Brandfall jedoch zu einem neuen Problem, nämlich einem sogenannten und insbesondere für Wachse typischen "Kerzendochteffekt", bei welchem das niederviskose Polyolefinwachs im Brandfall durch Kapillarkräfte der Textilfasern aufgesogen wird. Dieser Kerzendochteffekt kann auch dann auftreten, wenn das Polyolefinwachs eine nur einfache Flammschutzausrüstung aufweist, da der Kerzendochteffekt im Brandfall meist zu einer Separation von Polyolefinwachs und Flammschutzmittel führt. Derartige Wachse unterscheiden sich vom chemisch verwandten Polymer insbesondere durch ihr niedrigeres Molekulargewicht und, damit korrelierend, durch ihre niedrigere Schmelzviskosität. Unter Polyolefinwachsen werden hier in Abgrenzung zu Kunststoffen solche Polyolefine verstanden, deren Schmelzviskosität bei 170°C unterhalb von 40.000 mPa.s liegt. Im Vergleich zu einem Polyolefinwachs schmilzt ein analoges Polymer bei höheren Temperaturen und besitzt eine deutlich höhere Viskosität. Solche Bindemittel mit höheren Schmelzpunkten und Schmelzviskositäten erfordern höhere Verarbeitungstemperaturen oder den Einsatz von Lösemitteln. Ersteres führt im Extremfall bereits beim Applizieren der flammhemmenden Mischung in der Schmelze zu einem vorzeitigen Aufschäumen des Blähgraphits.

Die Aufgabe der Erfindung liegt darin, diese bei den bekannten Brandschutzmassen auftretenden Nachteile auszuschalten und ein System zu entwickeln, das nicht auf Dispersionen, Suspensionen oder Lösungen beruht, sondern ohne Löse-/Dispersions-/Suspensionsmittel auskommt und "ready-touse", also ohne weitere Komponenten gebrauchsfertig einsetzbar ist. Eine weitere Aufgabe der Erfindung liegt darin, die Vorteile durch Verwendung eines Polyolefinwachses als Hauptkomponente der Heißschmelzklebemasse zu nutzen und den Nachteil eines Kerzendochteffekts zu verhindern.

Es wurde nun gefunden, dass eine flammhemmend ausgerüstete Heißschmelzklebemasse auf Basis von polyolefinischen Homo- und Copolymerwachsen mit einer synergistischen Kombination eines Intumeszenzflammschutzmittels wie Blähgraphit und einem physikalisch und/oder chemisch aktiven Flammschutzmittels wie z. B. Aluminiumhydroxid sich besonders eignen um die Anforderungen schwer entflammbar, da kein Kerzendochteffekt, niedrige Rauchgasdichte beim Beflammen, "ready to use" (gebrauchsfertig einsetzbar), applizierbar mit gängigen HMA-Beschichtungsanlagen zu erfüllen.

Gleichzeitig wurde gefunden, dass eine Zumischung von Leitruß zur erfindungsgemäßen Heißschmelzklebemasse nicht nur die Antistatikausrüstung des Textilflächengebildes verbessert, sondern auch regulierend auf Schmelzviskosität der gesamten Heißschmelzklebemasse wirkt und somit den Kerzendochteffekt zusätzlich herabsetzt. Darüber hinaus wurde gefunden, dass sich Textilflächengebilde mit einem Bindemittel auf Basis von polyolefinischen Homo- und Copolymerwachsen, insbesondere bei Metallocenewachsen, mittels eines lösemittelbasierten Recyclingverfahrens aufgrund ihrer niedrigen Lösetemperaturen im Vergleich zu chemisch verwandten Polymeren höherer Molmasse, einfacher sowie gründlicher abtrennbar sind und besonders eignen um daraus sortenrein die Werkstoffkomponenten (Flammschutzsystem und Polyolefinwachs zurück zu gewinnen. Die erfindungsgemäße Heißschmelzklebemasse eignet sich außerdem für Flächengebilde sowohl mit geschlossenen Oberflächen wie z. B. Folie und Laminate als auch für offene Oberflächen wie Teppichrückseiten, Gewebe und generell textile Flächengebilde. Durch die homogene Vermischung der Zubereitung kann eine sehr dünne geschlossene Schicht auf dem jeweiligen Träger gebildet werden, die im Vergleich zu herkömmlichen Beschichtungen zu einer beträchtlichen Gewichtsersparnis des Materials führt. So erfüllt die erfindungsgemäße Heißschmelzklebemasse die anspruchsvollen Brandsicherheitsstandards für Flugzeugteppiche, insbesondere für Rauchgasdichte (ABD 0031/BMS 7238/39), Entflammbarkeit (FAR 25.853), Oberflächen- und Durchgangswiederstand (TN ESK/021/99, DIN 54345-1) und dies bei sehr guter Dimensionsstabilität und einem Auftragsgewicht zwischen 300 und 400 g, was einer Gewichtsersparnis gegenüber einem konventionellen mit Latex beschichteten Flugzeugteppich von 300 bis 500 g/m² entspricht.

Gegenstand der Erfindung sind daher sog. "ready to use" (gebrauchsfertige) flammhemmend ausgerüstete Heißschmelzklebemassen, enthaltend
a) 20 bis 70 Gew.-% ein oder mehrere Polyolefinwachs/e aus einem oder mehreren C₃-C₁₈-α-Olefin(en) sowie gegebenenfalls Ethylen
b) 9 bis 30 Gew.-% Blähgraphit,
c) 5 bis 30 Gew.-% eines weiteren Flammschutzmittels
d) 0 bis 15 Gew.-% eines antistatisch wirkenden Hilfsmittels
e) 0 bis 12 Gew.-% eines oder mehrere Harz/e
f) 0 bis 40 Gew.-% eines oder mehrerer amorpher, ataktischer Poly-alpha-Olefins/e (APAO)

Bevorzugt enthalten diese Heißschmelzklebemassen
a) 40 bis 70 Gew.-% ein oder mehrere Polyolefinwachs/e aus einem oder mehreren C₃-C₁₈-α-Olefin(en) sowie gegebenenfalls Ethylen
b) 9 bis 30 Gew.-% Blähgraphit,
c) 5 bis 30 Gew.-% eines weiteren Flammschutzmittels
d) 5 bis 15 Gew.-% eines antistatisch wirkenden Hilfsmittels
e) 0 bis 12 Gew.-% eines oder mehrere Harz/e

Bevorzugt umfassen die erfindungsgemäßen Polyolefinwachse Homopolymere auf Basis von Ethylen oder Propylen sowie Copolymere auf Basis von Polypropylen und 0,1 bis 30 Gew.-% Ethylen und/oder 0,1 bis 50 Gew.-% eines verzweigten oder unverzweigten C₄-C₂₀-α-Olefins. Diese Polyolefinwachse können in bekannter Weise durch Polymerisation z. B. nach einem Insertionsmechanismus mit Hilfe von Ziegler- oder Metallocenkatalysatoren, durch ein radikalisches Hochdruckverfahren oder durch thermischen Abbau von kunststoffartigen Polyolefinen hergestellt werden. Entsprechende Herstellprozesse sind etwa in Ullmann's Encyclopedia of Industrial Chemistry, 2000. Waxes sowie in Ullmann's Encyclopedia of Industrial Chemistry, 2006, Metallocenes beschrieben. Erfindungsgemäß sind auch Copolymere auf Basis von Ethylen-covinylacetat sowie amorphe Polyalphaolefine (APAO) eingeschlossen.

Erfindungsgemäß bevorzugt sind Polyolefinwachse, die mit Metallocenkatalysatoren hergestellt wurden. Überraschend ergab sich, dass Polyolefinwachse auf Metallocenbasis die anwendungsrelevanten Kriterien (definierter Schmelzbereich, niedrige Viskosität, Adhäsion und Kohäsion, Recyclefähigkeit) besser vereinen als beispielsweise Wachse aus dem Zieglerverfahren oder aus dem radikalischen Hochdruckverfahren (siehe hierzu auch 2012DE101).

Bevorzugt sind Polyolefinwachse mit einer zahlenmittleren Molmasse Mₙ zwischen 500 und 25.000 g/mol und einer gewichtsmittleren Molmasse M_{w} zwischen 1.000 und 40.000 g/mol sowie eine Polydispersität M_{W}/Mₙ von kleiner 5, bevorzugt kleiner 2,5 besonders bevorzugt kleiner 1,8 aufweisen. Die Bestimmung der Molmasse erfolgt gelpermeationschromatographisch.

Bevorzugt zeichnen sich die Polyolefinwachse durch einen Tropf- oder Erweichungspunkt Ring/Kugel zwischen 40 °C und 160 °C, bevorzugt zwischen 80 °C und 140 °C sowie eine Schmelzviskosität, gemessen bei 170 °C, von maximal 40.000 mPa.s, bevorzugt maximal 20.000 mPa^{.}s aus. Die Schmelzviskositäten werden nach DIN 53019 mit einem Rotationsviskosimeter und die Erweichungspunkte Ring/Kugel nach ASTM D3104 bestimmt.

Bevorzugt umfasst die erfindungsgemäße flammhemmend ausgerüstete Heißschmelzklebemasse stets eine synergistische Kombination aus Blähgraphit und eines oder mehrerer weiterer Flammschutzmittel. Als flammhemmend wirksame Massenverhältnisse Blähgraphit zu weiterer Flammschutzmittel(-kombination) haben sich folgende synergistischen Mischungsverhältnisse bewährt: 25 % bis 75 % Blähgraphit und 75 % bis 25 % des Synergisten, bevorzugt 50 % bis 66,6 % Blähgraphit zu 50 % bis 33,3 % des Synergisten, besonders bevorzugt 50 % bis 60 % Blähgraphit zu 50 % bis 40 % des Synergisten.

Blähgraphit wird industriell durch Oxidation von Graphit mit Schwefelsäure oder Salpetersäure hergestellt. Entsprechende Herstellprozesse und Merkmale von Blähgraphit sind etwa in Ullmann's Encyclopedia of Industrial Chemistry, Vol 6, 2002, Industrial Carbons beschrieben. Als Synergist zu Blähgraphit kommen diverse Flammschutzmittel aus der Gruppe halogenhaltiger, (organo-)phosphorbasierter, stickstoffhaltiger und/oder aus der Gruppe der anorganischen Flammschutzmittel in Frage. Typische Flammschutzmittel und chemische Flammschutzklassen sind etwa in Ullmann's Encyclopedia of Industrial Chemistry, Vol 5, 2000, Flame Retardants sowie in Ullmann's Encyclopedia of Industrial Chemistry, Vol 5, 2000, Plastics, Additives, Chap. 6 beschrieben.

Erfindungsgemäß bevorzugt wird als flammhemmend wirksam eine Kombination von Blähgraphit mit einem phosphor-basierenden Flammschutzmittel wie beispielsweise Diethylphosphinaluminat, Diethylphosphinzinkat und/oder Ammoniumpolyphosphat mit gegebenenfalls weiteren Synergisten wie beispielsweise Polypiperazinmorpholinderivaten eingesetzt. Besonders bevorzugt wird eine Kombination von Blähgraphit mit einem anorganischen Flammschutzmitteln wie beispielsweise Aluminium- oder Magnesiumhydroxid oder auch Zinkborat eingesetzt.

Erfindungsgemäß als flammhemmend wirksame Kombinationen wird auch die Kombination von Blähgraphit mit NOR-HALS Verbindungen bevorzugt. NOR-HALS Verbindungen (z. B. Hostavin NOW^{®}, Clariant; Flamestab NOR 116^{®}, BASF, etc.) sind sterisch gehinderte Alkoxyamine deren klassisches Einsatzgebiet im Bereich der Lichtstabilisatoren zu finden ist.

Bevorzugt umfasst die erfindungsgemäße flammhemmend ausgerüstete Heißschmelzklebemasse ggf. den Einsatz eines antistatisch wirksamen Hilfsmittels. Der Einsatz von Antistatika und andere Hilfsmittel zur Verringerung von statischer Aufladung in Textilien ist hinreichend bekannt und in Ullmann's Encyclopedia of Industrial Chemistry, Vol 5, 2011, Textile Auxiliaries, 8. Auxiliaries for Technical Textiles S.176 beschrieben. Typischerweise werden als Antistatika in Textilien z. B. Tenside (z. B. quartäre Ammoniumverbindungen), Salze und Rußdispersionen verwendet. Gelegentlich kommen auch Metallpulver und feine Metalldrähte zum Einsatz. Bevorzugt können zur antistatischen Ausrüstung der erfindungsgemäßen Heißschmelzklebemasse die oben genannten Hilfsmittel verwendet werden. Besonders bevorzugt kann als Antistatika bei der erfindungsgemäßen Heißschmelzklebemasse Leitruß eingesetzt werden, da dieses überraschenderweise dem "Kerzendochteffekt" des Polyolefinwachs zusätzlich entgegenwirkt. Die erfindungsgemäße Heißschmelzklebemasse enthält antistatisch wirkende Hilfsmittel in Anteilen zwischen 0 bis 15 Gew.-%.

Als Klebeharze eignen sich beispielsweise synthetische oder modifizierte Terpenharze, vollständig oder partiell hydrierte Kolophoniumharze, aliphatische Kohlenwasserstoffharze sowie hydrierte und/oder anderweitig modifizierte aliphatische, aliphatische-aromatische oder aromatische Kohlenwasserstoffharze. Die erfindungsgemäße Schmelzklebermischung enthält Harze in Anteilen zwischen 0 bis 12 Gew.-%.

Weitere mögliche Bestandteile der erfindungsgemäßen flammhemmend ausgerüsteten Heißschmelzklebemasse sind unpolare oder polare Polymere wie z. B. Ethylen-Vinylacetat-Copolymere, ataktische Poly-α-Olefine (APAO), Polyisobutylen, Styrol-Butadien-Styrol (SBS), Stryl-Ethylen-Butadien-Styrol-(SEBS), Styrol-Isopren-Butadien-Styrol- (SIBS) oder Styrol-Isopren-Styrol-Blockpolymere (SIS) für besonders hoch beanspruchte Verklebung auch Polyamide oder Polyether. Ataktische Poly-α-Olefine (APAO) zeichnen sich dabei durch eine überwiegend amorphe Schmelzcharakteristik aus, was sich in einer Kristallinität kleiner 30 % (bestimmt nach DSC (differential scanning calorimetry) bzw. einer Schmelzenthalpie kleiner 50 J/g äußert. Diese Bestandteile der erfindungsgemäßen Heißschmelzklebemasse können in Anteilen zwischen 0 bis 40 Gew.-% vorliegen.

Die erfindungsgemäße Heißschmelzklebemasse kann zusätzlich Füllstoffe (z. B. Calciumcarbonat) oder Hilfsstoffe wie Weichmacher (z. B. Kohlenwasserstofföle), Pigmente, Antioxidantien und weitere Wachse enthalten. Weitere Wachse können sowohl natürliche, gegebenenfalls raffineriert Produkte, z. B. mikro- oder makrokristalline Paraffine oder Tafelparaffine wie auch synthetische Wachse wie z. B. Fischer-Tropsch-Paraffine sein.

Bevorzugt zeichnet sich die erfindungsgemäße Heißschmelzklebemasse durch einen Tropf- oder Erweichungspunkt Ring/Kugel zwischen 40 und 160°C, bevorzugt zwischen 80 und 160°C und einer Schmelzviskosität, gemessen bei 170°C zwischen 5.000 und 120.000 mPa.s, bevorzugt zwischen 5.000 und 80.000 mPa.s, besonders bevorzugt zwischen 10.000 und 70.000 mPa.s aus. Die Schmelzviskositäten werden nach DIN 53019 mit einem Rotationsviskosimeter und die Erweichungspunkte Ring/Kugel nach ASTM D3104 bestimmt.

Bevorzugt wird die erfindungsgemäße Heißschmelzklebemasse als Schmelzkleber zum Verkleben von Textilflächengebilden (z. B. Verkleben von Textilflächen, Fixieren von losem Textilgewebe, Rückseitenbeschichtung von Tuftware, Teppichen, etc.) verwendet. Bevorzugt wird die erfindungsgemäße Heißschmelzklebemasse als Schmelzkleber zur Rückseitenbeschichtung bzw. zum Verkleben oder Fixieren insbesondere für Textilien (beispielsweise Teppiche, Dachbahnen, Sitzbezüge, etc) im Leichtbau (beispielsweise Kfz-, Elektromobilität, Flugzeug-Innenausstattung etc.) verwendet. Bevorzugt wird die erfindungsgemäße Heißschmelzklebemasse als Schmelzkleber zur Rückseitenbeschichtung bzw. zum Verkleben, Rückseitenbeschichtung oder Fixieren insbesondere von Textilien, Textilverbunden, Textilflächengebilden (Woven, Tuftware, etc.) mit erhöhten Brandsicherheitsbestimmungen (z. B. schwer entflammbar, niedrige Rauchgasdichte) wie beispielsweise in öffentlichen Gebäuden, insbesondere in Flughäfen, Kinos, Theater, Schulen etc., eingesetzt. Bevorzugt wird die erfindungsgemäße Heißschmelzklebemasse als Schmelzkleber zur Rückseitenbeschichtung von elektrisch beheizten Textilflächengebilden (beispielsweise elektrisch beheizte Kunstrasen, elektrisch beheizte Teppiche, elektrisch beheizte Tapeten, etc.) eingesetzt. Bevorzugt wird die erfindungsgemäße Heißschmelzklebemasse als Schmelzkleber zum Verkleben von elektrisch beheizten Textilverbunden (beispielsweise elektrisch beheizte Motoradanzüge, Skianzüge, Skischuhe, etc.) eingesetzt.

Bevorzugt wird die erfindungsgemäße Heißschmelzklebemasse als gebrauchsfertiger, lösemittelfreier Compound ("ready to use") eingesetzt. Bevorzugt wird die erfindungsgemäße Heißschmelzklebemasse zwischen 100 - 180°C, besonders bevorzugt zwischen 120 - 170°C, besonders bevorzugt zwischen 140 - 160°C aufgetragen (durch beispielsweise Sprühen, Rakeln, Gießen, Gießwalzen etc.).

Bevorzugt beträgt das Auftragsgewicht der erfindungsgemäßen Heißschmelzklebemasse zwischen 25 bis 2000 g/m², besonders bevorzugt zwischen 100 bis 1000 g/m², besonders bevorzugt zwischen 300 - 400 g/m².

Bevorzugt führt die Verwendung der erfindungsgemäßen Heißschmelzklebemasse als Fixierung oder Rückseitenbeschichtung Textilflächengebilden bzw. Textilverbunden, dass diese einen Oberflächenwiederstand sowie einen Durchgangswiederstand kleiner 10⁸ Ω, bevorzugt kleiner 10⁷ Ω, besonders bevorzugt kleiner 10⁶ Ω aufweisen.

Der typische Aufbau eines Textilflächengebildes besteht im einfachsten Fall aus einer gewebten (Woven) oder ungewebten Textilfaser (Nonwoven) oder einer Tuftware (inkl. Träger) und einem Stoff bzw. einer Zubereitung zur Fixierung der Textilfasern oder Filamente. Unter einem Textilflächenverbund wird hier im weitesten Sinne miteinander fixierte Textilflächen verstanden. Erfindungsgemäß übernimmt die Aufgabe der Fixierung die erfindungsgemäße Heißschmelzklebemasse. Typische Werkstoffe für die Filamente und Fasern der Woven, Nonwoven und Tuftwaren können dabei Naturfasern (beispielsweise Wolle, Baumwolle, Flachs, Sisal-, Kokos, Zellulosefasern, etc.) oder Kunstfasern aus LLDPE, LDPE, PP, Polyester (z. B. PET, PBT) oder Polyamid (z. B. PA6, PA66, PA6,10) oder Polyacrylnitril oder Mischungen davon sein. Zusätzlich können obige Fasermaterialien zusätzlich unbrennbare Fasern wie beispielsweise Carbon-, Aramid und/oder Glasfasern enthalten. Typische Werkstoffe für die Träger von Tuftwaren sind z. B. Polyethylen, Polypropylen und Polyester. Die Rückseitenverklebung bzw. Verklebung besteht erfindungsgemäß aus der erfindungsgemäßen Heißschmelzklebemasse. Im Bereich flammgeschützter Textilien spielen ebenfalls weitere flammhemmende Hilfsstoffe auf der Oberfläche oder innerhalb der Textilfasern eine wichtige Rolle. Beispiele für typische flammhemmend wirkende Ausrüstung von Textilfasern finden sich u. a. in Kirk-Othmer Encyclopedia of Chemical Technology, Wiley, 2000, Flame Retardants for Textiles.

Erfindungsgemäß ist die Heißschmelzklebemasse wegen der niedrigen Lösetemperatur der polyolefinischen Homo- und Copolymerwachse im Vergleich zu chemisch verwandten Polymeren höherer Molmasse einfacher sowie gründlicher abtrennbar und somit besonders geeignet durch ein lösemittelbasiertes Trennverfahren als "End of Life" Option für den gesamten Textilflächenverbund die eingesetzten Werkstoffkomponenten, insbesondere das Polyolefinwachs sortenrein wiederzugewinnen. Geeignete lösemittelbasierte Trennverfahren (selektives Lösen, selektives Quellen) sind in 2012DE101 sowie in DE-A-102005026451 hinreichend beschrieben. Bevorzugt ist die Anwendung eines lösungsmittelbasierten Trennverfahrens zum Recycling von Textilflächenverbunden sowie von Bodenbelagskonstruktionen wie beispielsweise Tuftware, z. B. Kunstrasen, Teppiche und Webteppiche, Textiltapeten etc. zur stofflichen Auftrennung der Textilfaser, der Flammschutzadditivkombination (z. B. ATH zusammen mit Blähgraphit) sowie besonders bevorzugt des Polyolefinwachses. Bevorzugt löst sich das Polyolefinwachs sortenrein vom restlichen Textilflächenverbund unterhalb von 100 °C mit einem geeigneten Lösemittel (z. B. Toluol). Als sortenrein werden die Werkstoffkomponenten, insbesondere das Polyolefinwachs dann betrachtet, wenn die Querkontamination mit einer anderen Werkstoffkomponente nicht über 5 Gew.-%, bevorzugt nicht über 2 Gew.-%, besonders bevorzugt nicht über 0,5 Gew.-% beträgt und damit sich die mechanischen Eigenschaften (wie z. B. Zugfestigkeit, Reißdehnung, E-Modul, etc.) gegenüber den ursprünglichen vor dem Recycling um nicht mehr als 10%, bevorzugt um nicht mehr als 5% verändern. Die erfindungsgemäße Anwendung eines lösungsmittelbasierten Trennverfahrens auf die Textilflächenverbund oder die Bodenbelagskonstruktionen setzt voraus, dass mindestens eine der Werkstoffkomponenten, bevorzugt das für die Rückseitenverklebung eingesetzte Polyolefinwachs löslich ist und die flammhemmend wirkende Additivkombination selbst unlöslich ist.

### Beispiele:

Nachfolgende Beispiele sollen die Erfindung näher erläutern, ohne sie jedoch auf konkret angegebene Ausführungsformen zu beschränken. Prozentangaben sind, wenn nicht anders angegeben als Gewichtsprozente zu verstehen.

Geprüft wurden verschiedene Ausführungsformen der erfindungsgemäßen Heißschmelzklebemasse als Teppichrückseitenbeschichtung mit dem Ziel die Brandsicherheitsstandards für Flugzeugteppiche zu erreichen.
Das Auftragsgewicht der Heißschmelzklebemassen beträgt jeweils 350 g/m².

Der Oberflächen- sowie Durchgangswiderstand wurden gemäß DIN 54345-1 bestimmt.
Brennverhalten und Rauchgasdichte wurden gemäß ABD 0031 bestimmt.
Die Schmelzviskositäten der eingesetzten Polyolefinwachse und der Compounds wurden bei 170°C nach DIN 53019 mit einem Rotationsviskosimeter bestimmt.

Die Erweichungspunkte Ring/Kugel wurden nach ASTM D3104 bestimmt.
Das Molmassengewichtsmittel M_{w} und das Molmassenzahlenmittel Mₙ wurden durch Gelpermeationschromatographie bei einer Temperatur von 135°C in 1,2-Dichlorbenzol gegen einen entsprechenden PP- bzw. PE-Standard ermittelt.

Die Herstellung der gebrauchsfertigen Heißschmelzklebemassen erfolgte durch Extrusion mit Hilfe eines gleichsinnig drehenden 16 mm Doppelschneckenextruders bei 130 °C. Im Falle des Compounds auf Basis von Polyethylen (Hostalen GA7260 G) erfolgte die Herstellung bei 160 °C.

Die Beschichtung der Teppichrohware erfolgte mittels einer Heißwalze bei 160 °C.

Entsprechende flammgeschützte Mischungen auf Basis von Polyethylen (Hostalen GA7260 G) waren zu hochviskos um diese auf den Teppich zu applizieren. Höhere Verarbeitungstemperaturen > 170°C führten zu einem vorzeitigen Aufschäumen des Blähgraphits.

Es wurden folgende handelsübliche Produkte als Komponenten (Polyolefinwachse, Flammschutzmittel, Antistatika, etc.) verwendet:

**Tabelle 1: Eingesetzte Rohstoffe**

| | Chemische Identität | Handelsname | Hersteller | Viskosität bei 170°C | Erweichungspunkt Ring/Kugel | Molmasse M_{w} | Mol-masse Mₙ | Polydispersität |
|---|---|---|---|---|---|---|---|---|
| | | | | [mPa.s] | [°C] | [g/mol] | [g/mol] | |
| Polymer | Polethylen | Hostalen GA7260 G | Basell | (MFR_{190°C,2,1} 8) | (Tm: 135°C) | - | - | - |
| Polyolefinwachs | Copolymerwachs Ethylen-Propylen | Licocene PP 2602 | Clariant | 6300 | 99 | 29700 | 17900 | 1,7 |
| | Copolymerwachs Ethylen-Propylen | Licocene PP 1502 | Clariant | 1800 | 86 | 13300 | 22100 | 1,7 |
| | Copolymerwachs Ethylen-Propylen | Licocene PP 1302 | Clariant | 200 | 90 | 11600 | 7100 | 1,6 |
| Blähgraphit | Blähgraphit | ES 100 C10 | Kropfmühl | n.a. | n.a. | n.a. | n.a. | n.a. |
| | Aluminium(III)hydroxid | Apyral ATH 1E | Nabaltec | n.a. | n.a. | n.a. | n.a. | n.a. |
| | Ethylendiaminphosphat | Ethylendiaminphosphat | VWR | n.a. | n.a. | n.a. | n.a. | n.a. |
| Flammschutzmittel | Melamin | Melapur MP 200/70 | BASF | n.a. | n.a. | n.a. | n.a. | n.a. |
| | Ammoniumpoly-phosphat | Exolit AP 422 | Clariant | n.a. | n.a. | n.a. | n.a. | n.a. |
| | Ammoniumpolyphos-phat + Synergist | Exolit AP 750 | Clariant | n.a. | n.a. | n.a. | n.a. | n.a. |
| | Diethylphosphinsäurealuminat +Synergisten | Exolit AP 766 | Clariant | n.a. | n.a. | n.a. | n.a. | n.a. |
| | (2,2,6,6-Tetramethyl-4-piperidinyl)-graft-PE-Wachs | Hostavin NOW | Clariant | n.a. | n.a. | n.a. | n.a. | n.a. |
| Antistatika | Feindisperser Ruß | Leitruß SC-20 | Kropfmühl | n.a. | n.a. | n.a. | n.a. | n.a. |
| | Glycerol monostearate | Hostatstat FE 2 | Clariant | n.a. | n.a. | n.a. | n.a. | n.a. |
| | N,N-bis-(2-hydroxyethyl)-alkyl-(C16-C18)-amine | Hostastat FA 68 | Clariant | n.a. | n.a. | n.a. | n.a. | n.a. |
| Harz | Aliphatisches Kohlenwasserstoffharz | Sukorez SU90 | Kolon | | | | | |
| APAO | Copolymer Ethylen-(C4-C8) α-Olefin | Vestoplast 703 | Evonik | 4000 | | | | |

| | | | | | | | | |
|---|---|---|---|---|---|---|---|---|
| n.a. - nicht anwendbar | | | | | | | | |

### Beispiel 1: Flammhemmend ausgerüstete Rückseitenbeschichtung auf Basis von Rohwolle (unbehandelt)

**Tabelle 2: Flammhemmend ausgerüstete Rückseitenbeschichtung für Teppiche auf Basis von Rohwolle (unbehandelt)**

| Formulierung für Schmelzkleber | 1 (Vgl.) | 2 (Vgl.) | 3 (Vgl.) | 4 (Vgl.) | 5 (Vgl.) | 6 (Vgl.) | 7 (Vgl.) | 8 (Vgl.) | 9 (Vgl.) | 10 (Vgl.) | 11 (Erf.) | 12 (Erf.) | 13 (Erf.) | 14 (Erf.) | 15 (Erf.) | 16 (Erf.) | 17 (Erf.) |
|---|---|---|---|---|---|---|---|---|---|---|---|---|---|---|---|---|---|
| Licocene 2602 | 52 | 53 | 53,5 | 52 | 52 | 52 | 52 | 52 | 52 | 52 | 52 | 52 | 52 | 52 | 52 | 52 | 52 |
| Leitruss SC-20 | 8 | 7 | 6,5 | 8 | 8 | 8 | 8 | 8 | 8 | 8 | 8 | 8 | 8 | 8 | 8 | 8 | 8 |
| Ethylendiamin-phosphat | - | - | - | - | - | - | - | 40 | - | - | - | - | - | - | - | - | - |
| Melapur MP 200/70 | - | - | - | - | - | 20 | 40 | - | - | - | - | - | - | - | - | - | - |
| Exolit AP 422 | - | - | - | - | 40 | 20 | - | - | - | - | - | - | - | 20 | - | - | - |
| Exolit AP 750 | - | - | - | 40 | - | - | - | - | - | - | - | - | - | - | - | - | - |
| Exolit AP 766 | 40 | 40 | 40 | - | - | - | - | - | - | - | 30 | 25 | 20 | - | - | - | - |
| Apyral ATH 1 e | - | - | - | - | - | - | - | - | - | 40 | - | - | - | - | 25 | 20 | 15 |
| Blähgraphit ES 100 C 10 | - | - | - | - | - | - | - | - | 40 | - | 10 | 15 | 20 | 20 | 15 | 20 | 25 |
| Oberflächenwiderstand | <10⁶ | 3,8* 10¹¹ 500V | 1,8* 10⁸ 500V | >1* 10⁶ 10V | >1* 10⁶ 10V | >1* 10⁶ 10V | >1* 10⁶ 10V | >1* 10⁶ 10V | <10⁶ | <10⁶ | <10⁶ | <10⁶ | <10⁶ | <10⁶ | <10⁶ | <10⁶ | <10⁶ |
| Durchgangswiderstand | <10⁶ | 0,6* 10⁶ 10V | 1,4* 10⁶ 10V | 5* 10⁹ 10V | 5* 10⁹ 10V | 5* 10⁹ 10V | 5* 10⁹ 10V | 5* 10⁹ 10V | <10⁶ | <10⁶ | <10⁶ | <10⁶ | <10⁶ | <10⁶ | <10⁶ | <10⁶ | <10⁶ |
| Viskosität bei 170°C [mPa*s] | 85220 | 71640 | 63870 | 103400 | 77430 | 94700 | 129000 | 97700 | 69890 | 55310 | 79330 | 72230 | 67250 | 80360 | 45310 | 52170 | 61540 |
| Brennverhalten | brennt | brennt | brennt | brennt | brennt | brennt | brennt | brennt | brennt rußt | brennt | brennt nicht | brennt nicht | brennt nicht | brennt nicht | brennt nicht | brennt nicht | brennt nicht |
| Rauchgasdichte (FAR 25853-Norm) | Nicht erfüllt | Nicht erfüllt | Nicht erfüllt | Nicht erfüllt | Nicht erfüllt | Nicht erfüllt | Nicht erfüllt | Nicht erfüllt | Nicht erfüllt | Nicht erfüllt | erfüllt | erfüllt | erfüllt | erfüllt | erfüllt | erfüllt | erfüllt |

Die Ergebnisse in Tabelle 2 zeigen, dass durch den Einsatz einfacher Flammschutzsysteme (Vergleichsbeispiele 1-10) die Brennbarkeit des Teppichs nicht verhindert werden kann. Ferner zeigt sich durch Variation der Leitrußkonzentration nicht nur der Oberflächenwiderstand sondern auch die Viskosität gesteuert werden kann (Vergleichsbeispiel 1-3). Erst die synergistische Kombination von Blähgraphit mit einem weiteren Flammschutzmittel wie ATH (Vergleichsbeispiele 15-17), Aluminiumpolyphosphat (Exolit AP 422, Vergleichsbeispiel 14) oder Diethylphosphinsäurealuminat in Kombination mit Polypiperazinmorpholin (Exolit AP766, Vergleichsbeispiele 11-13) zeigt den gewünschten Flammschutz.

### Beispiel 3: Flammhemmend ausgerüstete Rückseitenbeschichtung auf Basis von Mischwolle

**Tabelle 3: Flammhemmend ausgerüstete Rückseitenbeschichtung für Teppiche auf Basis von Mischwolle (20 % Polyamid + 80 % Schurwolle)**

| Formulierung für Schmelzkleber | 18 (Vgl.) | 19 (Vgl.) | 20 (Erf.) | 21 (Erf.) | 22 (Vgl.) | 23 (Erf.) | 24 (Erf.) | 25 (Erf.) | 26 (Erf.) |
|---|---|---|---|---|---|---|---|---|---|
| Licocene PP 2602 | 52 | 52 | 52 | 52 | 52 | 52 | 52 | 30 | - |
| Licocene PP 1502 | - | - | - | - | - | - | - | - | 52 |
| Licocene PP 1302 | - | - | - | - | - | - | - | 22 | - |
| Leitruss SC-20 | 8 | 8 | 8 | 8 | 8 | 8 | 8 | 8 | 8 |
| Exolit AP 422 | | - | - | 20 | - | - | - | - | - |
| Exolit AP 766 | 30 | 25 | 20 | - | - | - | - | - | - |
| Apyral ATH 1e | - | - | - | - | 25 | 20 | 15 | 15 | 15 |
| Blähgraphit ES 100 C 10 | 10 | 15 | 20 | 20 | 15 | 20 | 25 | 25 | 25 |
| Oberflächenwiderstand | <10⁶ | <10⁶ | <10⁶ | <10⁶ | <10⁶ | <10⁶ | <10⁶ | <10⁶ | <10⁶ |
| Durchgangswiderstand | <10⁶ | <10⁶ | <10⁶ | <10⁶ | <10⁶ | <10⁶ | <10⁶ | <10⁶ | <10⁶ |
| Viskosität bei 170°C [mPa*s] | 79330 | 72230 | 67250 | 80360 | 45310 | 52170 | 61540 | 26130 | 28740 |
| Brennverhalten | brennt | 25s, 29s | 2s, 3s | brennt nicht | 4s, 5s | brennt nicht | brennt nicht | brennt nicht | brennt nicht |
| Rauchgasdichte (FAR 25853-Norm) | nicht erfüllt | nicht erfüllt | erfüllt | erfüllt | erfüllt | erfüllt | erfüllt | erfüllt | erfüllt |

Schwieriger ist der Flammschutz von Teppichen, deren Fasern aus Mischwolle mit Anteilen an synthetischen Fasern (20 % Polyamid + 80 % Schurwolle) bestehen, zu erzielen. Hier zeigt sich die Notwendigkeit einer genauen Abstimmung der Flammschutzmittelkombination auf den eingesetzten Fasertyp um einen wirksamen Flammschutz zu erzielen. So zeigen in Tabelle 3 insbesondere Mischungen mit einem höheren Blähgraphitanteil (20 und 25 wt.%, Beispiele 20, 21, 23 - 26) den erwünschten Flammschutz. Ferner konnte gezeigt werden, dass durch den Einsatz von niedrigviskosen Polyolefinwachsen direkt Einfluss auf die Schmelzviskosität der ganzen Schmelzmischung genommen werden kann (Beispiele 25 + 26).

### Beispiel 4: Flammhemmende Heißschmelzklebemasse ohne Antistatikausrüstung

Tabelle 4 zeigt die Brandeigenschaften von Teppichen welche eine Antistatikausrüstung bereits im Textil in Form von feinen Metalldrähten mitbringen. In der flammhemmend ausgerüsteten Rückseitenbeschichtung kann in diesem Fall auf zusätzliche Antistatika (Leitruß) verzichtet werden. Die dadurch verringerte Viskosität der Schmelzklebercompound führt dadurch zu einer noch besseren Verarbeitbarkeit bzw. der Möglichkeit die Verarbeitungstemperatur von ca. 10 °C bis zu ca. 40 °C zu senken.

**Tabelle 4: Flammhemmend ausgerüstete Rückseitenbeschichtung für Teppiche auf Basis von Mischwolle (20 % Polyamid + 80 % Schurwolle, < 0,2 wt.-% Antistatikausrüstung im Textil, leitfähige Filamente)**

| Formulierung für Schmelzkleber | 27 (Vgl.) | 28 (Vgl.) | 29 (Erf.) | 30 (Erf.) | 31 (Vgl.) | 32 (Erf.) | 33 (Erf.) |
|---|---|---|---|---|---|---|---|
| Licocene 2602 | 60 | 60 | 60 | 60 | 60 | 60 | 60 |
| Leitruss SC-20 | - | - | - | - | - | - | - |
| Exolit AP 422 | - | - | - | 20 | - | - | - |
| Exolit AP 766 | 30 | 25 | 20 | - | - | - | - |
| Apyral ATH 1 e | - | - | - | - | 25 | 20 | 15 |
| Blähgraphit ES 100 C 10 | 10 | 15 | 20 | 20 | 15 | 20 | 25 |
| Oberflächenwiderstand | <10⁶ | <10⁶ | <10⁶ | <10⁶ | <10⁶ | <10⁶ | <10⁶ |
| Durchgangswiderstand | <10⁶ | <10⁶ | <10⁶ | <10⁶ | <10⁶ | <10⁶ | <10⁶ |
| Viskosität | 19830 | 17420 | 16650 | 15560 | 14450 | 14390 | 14660 |
| Brennverhalten | brennt | brennt | brennt nicht | brennt nicht | 6s, 4s | brennt nicht | brennt nicht |
| Rauchgasdichte (FAR 25853-Norm) | nicht erfüllt | nicht erfüllt | erfüllt | erfüllt | erfüllt | erfüllt | erfüllt |

### Beispiel 5: Recycling des Polyolefinwachses durch selektives Lösen.

2 kg Teppichabfall (Vers-Nr. 23 wurden mit 10 kg eines geeigneten Lösungsmittels (hier: Xylol) versetzt und auf 80°C erwärmt. Die Lösetemperatur des Licocene 2602 liegt bei 73°C. Die Flammschutzausrüstung konnte durch Filtration abgetrennt werden. Die Textilfasern wurden durch das Lösemittel nicht angegriffen und blieben komplett erhalten. Die Lösezeit lag unter 20 min. Das Polyolefinwachs wurde durch Temperaturabsenkung ausgefällt, ausgepresst und im Vakuum bei 40°C getrocknet. Das dadurch zurückgewonnene Lösungsmittel wurde dem Prozess wieder zugeführt.

**Tabelle 5: Lösemittelbasiertes Recycling des Teppichs (Vers.-Nr. 23)**

| | | Licocene PP2602 (Rückseitenbeschichtung) | PP-PE Copolymerwachs Recyclat |
|---|---|---|---|
| Tropfpunkt | [°] | 97 | 97 |
| Tₘ | [°] | 88 | 89 |
| ΔHₘ | [mJ/mg] | -39 | -37 |
| Mₙ | [g/mol] | 17900 | 18100 |
| M_{w} | [g/mol] | 29700 | 30000 |
| PDI | | 1,7 | 1,7 |
| Zugfestigkeit | [MPa] | 9,9 | 9,7 |
| Reisdehnung | [%] | 960 | 990 |
| Viskosität bei 170°C | [mPa^{.}s] | 5000 | 4900 |

## Patentansprüche

1. Flammhemmend ausgerüstete Heißschmelzklebemasse, **dadurch gekennzeichnet, dass** diese folgende Komponenten enthält:
a) 20 bis 70 Gew.-% ein oder mehrere Polyolefinwachs/e aus einem oder mehreren C₃-C₁₈-α-Olefin(en) sowie gegebenenfalls Ethylen
b) 9 bis 30 Gew.-% Blähgraphit,
c) 5 bis 30 Gew.-% eines weiteren Flammschutzmittels
d) 0 bis 15 Gew.-% eines antistatisch wirkenden Hilfsmittels
e) 0 bis 12 Gew.-% eines oder mehrere Harz/e
f) 0 bis 40 Gew.-% eines oder mehrerer amorpher, ataktischer Poly-α-Olefins/e (APAO)

2. Flammhemmend ausgerüstete Heißschmelzklebemasse, **dadurch gekennzeichnet, dass** diese folgende Komponenten enthält:
a) 40 bis 70 Gew.-% ein oder mehrere Polyolefinwachs/e aus einem oder mehreren C₃-C₁₈-α-Olefin(en) sowie gegebenenfalls Ethylen
b) 9 bis 30 Gew.-% Blähgraphit,
c) 5 bis 30 Gew.-% eines weiteren Flammschutzmittels
d) 0 bis 15 Gew.-% eines antistatisch wirkenden Hilfsmittels
e) 0 bis 12 Gew.-% eines oder mehrere Harz/e

3. Flammhemmend ausgerüstete Heißschmelzklebemasse gemäß Anspruch 1 und 2, **dadurch gekennzeichnet, dass** das oder die enthaltenen Polyolefinwachs/e ein oder mehrere Homopolymer/e auf Basis von Ethylen oder Propylen oder ein oder mehrere Copolymer/e bestehend aus Propylen und 0,1 bis 30 Gew.-% Ethylen und/oder 0,1 bis 50 Gew.-% mindestens eines verzweigten oder unverzweigten C₄-C₂₀ α-Olefins ist/sind.

4. Flammhemmend ausgerüstete Heißschmelzklebemasse gemäß einem oder mehreren vorhergehender Ansprüche, **dadurch gekennzeichnet, dass** das oder die enthaltenen Polyolefinwachs/e einen Erweichungspunkt Ring/Kugel zwischen 40 °C und 160 °C, bevorzugt zwischen 80 °C und 140 °C und eine Schmelzviskosität, gemessen bei 170 °C, von maximal 40.000 mPa.s, bevorzugt maximal 20.000 mPa·s aufweisen.

5. Flammhemmend ausgerüstete Heißschmelzklebemasse gemäß einem oder mehreren vorhergehender Ansprüche, **dadurch gekennzeichnet, dass** das Polyolefinwachs eine gewichtsmittlere Molmasse M_{w} zwischen 1.000 und 40.000 g/mol und eine zahlenmittlere Molmasse Mₙ zwischen 500 und 25 000 g/mol aufweisen sowie ein M_{w}/Mₙ < 5, bevorzugt < 2.5, besonders bevorzugt < 1,8.

6. Flammhemmend ausgerüstete Heißschmelzklebemasse gemäß einem oder mehreren vorhergehender Ansprüche, **dadurch gekennzeichnet, dass** das Polyolefinwachs mit Hilfe von Metallocenkatalysatoren hergestellt wurde.

7. Flammhemmend ausgerüstete Heißschmelzklebemasse gemäß Anspruch 1 und 2, **dadurch gekennzeichnet, dass** diese stets eine synergistische Kombination aus Blähgraphit und eines oder mehrerer weiterer Flammschutzmittel in der Kombination Blähgraphit zu Flammschutzmittel(-kombination) 1: 3 bis 3:1, bevorzugt 1:1 bis 2:1, besonders bevorzugt 1:1 bis 3:2 enthalten.

8. Flammhemmend ausgerüstete Heißschmelzklebemasse gemäß Anspruch 1, 2 und 7, **dadurch gekennzeichnet, dass** diese als weiteres Flammschutzmittel eines oder mehrere aus der Gruppe der halogenierten und/oder N-basierten, bevorzugt jedoch eines oder mehrere aus der Gruppe organophosphor-basierten Flammschutzmittel, besonders bevorzugt eines oder mehrere aus der Gruppe der anorganischen Flammschutzmittel enthalten.

9. Flammhemmend ausgerüstete Heißschmelzklebemasse gemäß Anspruch 1, 2, 7 und 8, **dadurch gekennzeichnet, dass** diese als Flammschutzmittel eine NOR-HALS-Verbindung (sterisch gehindertes Alkoxyamin) enthält.

10. Flammhemmend ausgerüstete Heißschmelzklebemasse gemäß Anspruch 1 und 2, **dadurch gekennzeichnet, dass** diese ein antistatisch wirkendes Hilfsmittel aus der Gruppe der leitenden Antistatika, insbesondere ausgewählt aus der Gruppe: Leitruß, Metallpulver, Metalldrähte, Metallfäden sowie nichtleitende Antistatika, oder quartäre Ammoniumverbindungen enthalten.

11. Flammhemmend ausgerüstete Heißschmelzklebemasse gemäß Anspruch 1 und 2, **dadurch gekennzeichnet, dass** diese als Harz/e beispielsweise Kolophoniumharz/e und deren Derivate oder Kohlenwasserstoffharz/e enthalten können.

12. Flammhemmend ausgerüstete Heißschmelzklebemasse gemäß Anspruch 1, **dadurch gekennzeichnet, dass** diese bis zu 40 Gew.% eines oder mehrerer amorpher, ataktischer Polyalpha-Olefine mit einem überwiegend amorphen Schmelzverhalten und einer Kristallinität von kleiner als 30%, bestimmt nach DSC (differential scanning calorimetry), enthalten.

13. Flammhemmend ausgerüstete Heißschmelzklebemasse gemäß Anspruch 1 und 2, **dadurch gekennzeichnet, dass** die Schmelzklebemasse einen Erweichungspunkt Ring/Kugel zwischen 40 und 160°C, bevorzugt zwischen 80 und 160°C und eine Schmelzviskosität, gemessen bei 170°C zwischen 5.000 und 120.000 mPa.s , bevorzugt zwischen 5.000 und 80.000 mPa.s, besonders bevorzugt zwischen 10.000 und 70.000 mPa.s aufweist.

14. Verwendung der erfindungsgemäßen Heißschmelzklebemasse, gemäß einem oder mehrerer vorhergehender Ansprüche, als Schmelzkleber.

15. Verwendung der erfindungsgemäßen Heißschmelzklebemasse, gemäß einem oder mehrere vorhergehender Ansprüche, **dadurch gekennzeichnet, dass** diese ohne Verwendung von Lösemittel als fertige Mischung ("ready to use") in der Schmelze zwischen 100 bis 180°C, bevorzugt zwischen 120 bis 170°C, besonders bevorzugt zwischen 140 - 160°C aufgetragen wird.

16. Verwendung der erfindungsgemäßen Heißschmelzklebemasse, gemäß einem oder mehrere vorhergehender Ansprüche, als Schmelzkleber zur Rückseitenbeschichtung von Textilflächengebilden.

17. Verwendung der erfindungsgemäßen Heißschmelzklebemasse, gemäß einem oder mehrere vorhergehender Ansprüche, als Schmelzkleber zur Rückseitenbeschichtung von elektrisch beheizten Textilflächengebilden .

18. Verwendung der erfindungsgemäßen Heißschmelzklebemasse, gemäß einem oder mehrere vorhergehender Ansprüche, als Schmelzkleber zur Verklebung von elektrisch beheizten Textilverbunden.

19. Verwendung der erfindungsgemäßen Heißschmelzklebemasse, gemäß einem oder mehrere vorhergehender Ansprüche, **dadurch gekennzeichnet, dass** nach Ausrüstung von Textilflächengebilden diese einen Oberflächenwiederstand sowie einen Durchgangswiederstand kleiner 10¹⁰ Ω, bevorzugt kleiner 10⁸ Ω, besonders bevorzugt kleiner 10⁶ Ω hat.

20. Verwendung der erfindungsgemäßen Heißschmelzklebemasse, gemäß Anspruch 16, **dadurch gekennzeichnet, dass** das Auftragsgewicht der Heißschmelzklebemasse zwischen 25 bis 2000 g/m², bevorzugt zwischen 100 - 1000 g/m² besonders bevorzugt zwischen 300 - 400 g/m² liegt.

21. Verwendung der erfindungsgemäßen Heißschmelzklebemasse, gemäß Anspruch 16, zur Ausrüstung von Textilflächengebilden, **dadurch gekennzeichnet, dass** die Fasern des Flächengebildes aus Woll-, Baumwoll-, Flachs-, Sisal-, Kokos- und/oder Zellulosefasern oder aus brennbaren synthetischen Fasern [beispielsweise LDPE, LLDPE, PP, Polyester (z.B. PET oder PET) oder aus Polyamid (z.B. PA6, PA66, PA6,10)] oder Polyacrylnitril oder Mischungen davon sind und ggf. eine flammhemmende Ausrüstung enthalten.

22. Verwendung der erfindungsgemäßen Heißschmelzasse, gemäß einem oder mehrerer vorhergehender Ansprüche, **dadurch gekennzeichnet, dass** die Fasern zusätzlich einen Anteil unbrennbarer Fasern, wie beispielsweise Carbon-, Aramid- und/oder Glasfasern enthalten.

23. Verwendung der erfindungsgemäßen Heißschmelzklebemasse, gemäß einem oder mehrerer vorhergehender Ansprüche, **dadurch gekennzeichnet, dass** die erfindungsgemäßen Heißschmelzklebemassen weitere Füllstoffe, wie z. B. Calciumcarbonat oder Hilfsstoffe wie z.B. Wachse, Harze, Weichmacher, Pigmente und Antioxidantien, etc. enthalten.

## Claims

1. A hot-melt adhesive composition having a flame-retardant finish, which comprises the following components:
a) 20 to 70 wt.% of one or more polyolefin wax(es) of one or more C₃-C₁₈-α-olefin(s) and optionally ethylene
b) 9 to 30 wt.% of expandable graphite,
c) 5 to 30 wt.% of a further flameproofing agent
d) 0 to 15 wt.% of an antistatically active auxiliary substance
e) 0 to 12 wt.% of one or more resin(s)
f) 0 to 40 wt.% of one or more amorphous, atactic poly-α-olefin(s) (APAO)

2. A hot-melt adhesive composition having a flame-retardant finish, which comprises the following components:
a) 40 to 70 wt.% of one or more polyolefin wax(es) of one or more C₃-C₁₈-α-olefin(s) and optionally ethylene
b) 9 to 30 wt.% of expandable graphite,
c) 5 to 30 wt.% of a further flameproofing agent
d) 0 to 15 wt.% of an antistatically active auxiliary substance
e) 0 to 12 wt.% of one or more resin(s)

3. The hot-melt adhesive composition having a flame-retardant finish as claimed in claim 1 and 2, wherein the polyolefin wax(es) contained therein is/are one or more homopolymer(s) based on ethylene or propylene or one or more copolymer(s) comprising propylene and 0.1 to 30 wt.% of ethylene and/or 0.1 to 50 wt.% of at least one branched or unbranched C₄-C₂₀ α-olefin.

4. The hot-melt adhesive composition having a flame-retardant finish as claimed in one or more of the preceding claims, wherein the polyolefin wax(es) contained therein has/have a ring/ball softening point of between 40°C and 160°C, preferably between 80°C and 140°C, and a melt viscosity, measured at 170°C, of a maximum of 40,000 mPa.s, preferably a maximum of 20,000 mPa·s.

5. The hot-melt adhesive composition having a flame-retardant finish as claimed in one or more of the preceding claims, wherein the polyolefin wax has a weight-average molecular weight M_{w} of between 1,000 and 40,000 g/mol and a number-average molecular weight Mₙ of between 500 and 25,000 g/mol, and an M_{w}/Mₙ of < 5, preferably < 2.5, particularly preferably < 1.8.

6. The hot-melt adhesive composition having a flame-retardant finish as claimed in one or more of the preceding claims, wherein the polyolefin wax has been prepared with the aid of metallocene catalysts.

7. The hot-melt adhesive composition having a flame-retardant finish as claimed in claim 1 and 2, wherein this always comprises a synergistic combination of expandable graphite and one or more further flameproofing agent in the combination of expandable graphite to flameproofing agent (combination) of from 1:3 to 3:1, preferably 1:1 to 2:1, particularly preferably 1:1 to 3:2.

8. The hot-melt adhesive composition having a flame-retardant finish as claimed in claim 1, 2 and 7, wherein this comprises as a further flameproofing agent one or more from the group of halogenated and/or N-based, but preferably one or more from the group of organophosphorus-based flameproofing agents, particularly preferably one or more from the group of inorganic flameproofing agents.

9. The hot-melt adhesive composition having a flame-retardant finish as claimed in claim 1, 2, 7 and 8, which comprises an NOR-HALS compound (sterically hindered alkoxyamine) as a flameproofing agent.

10. The hot-melt adhesive composition having a flame-retardant finish as claimed in claim 1 and 2, which comprises an antistatically acting auxiliary substance from the group of conductive antistatics, in particular selected from the group: conductive carbon black, metal powder, metal wires, metal threads and non-conductive antistatics, or quaternary ammonium compounds.

11. The hot-melt adhesive composition having a flame-retardant finish as claimed in claim 1 and 2, which can comprise as resin(s), for example, colophony resin(s) and derivatives thereof or hydrocarbon resin(s).

12. The hot-melt adhesive composition having a flame-retardant finish as claimed in claim 1, which comprises up to 40 wt.% of one or more amorphous, atactic poly-alpha-olefins having predominantly amorphous melting properties and a crystallinity of less than 30 %, determined by DSC (differential scanning calorimetry).

13. The hot-melt adhesive composition having a flame-retardant finish as claimed in claim 1 and 2, wherein the hot-melt adhesive composition has a ring/ball softening point of between 40 and 160 °C, preferably between 80 and 160°C, and a melt viscosity, measured at 170°C, of between 5,000 and 120,000 mPa.s, preferably between 5,000 and 80,000 mPa.s, particularly preferably between 10,000 and 70,000 mPa.s.

14. The use of a hot-melt adhesive composition according to the invention as claimed in one or more of the preceding claims as a hot-melt adhesive.

15. The use of a hot-melt adhesive composition according to the invention as claimed in one or more of the preceding claims, wherein this is applied without using a solvent as a finished mixture ("ready to use") in the melt at between 100 to 180°C, preferably between 120 to 170°C, particularly preferably between 140 - 160°C.

16. The use of a hot-melt adhesive composition according to the invention as claimed in one or more of the preceding claims as a hot-melt adhesive for the reverse side coating of textile sheet-like structures.

17. The use of a hot-melt adhesive composition according to the invention as claimed in one or more of the preceding claims as a hot-melt adhesive for the reverse side coating of electrically heated textile sheet-like structures.

18. The use of a hot-melt adhesive composition according to the invention as claimed in one or more of the preceding claims as a hot-melt adhesive for gluing electrically heated textile composites.

19. The use of a hot-melt adhesive composition according to the invention as claimed in one or more of the preceding claims, wherein after finishing of textile sheet-like structures these have a surface resistance and a volume resistance of less than 10¹⁰ Ω, preferably less than 10⁸ Ω, particularly preferably less than 10⁶ Ω.

20. The use of a hot-melt adhesive composition according to the invention as claimed in claim 16, wherein the application weight of the hot-melt adhesive composition is between 25 to 2,000 g/m², preferably between 100 - 1,000 g/m², particularly preferably between 300 - 400 g/m².

21. The use of a hot-melt adhesive composition according to the invention as claimed in claim 16 for finishing textile sheet-like structures, wherein the fibers of the sheet-like structure are made of wool, cotton, flax, sisal, coconut and/or cellulose fibers or of combustible synthetic fibers [for example LDPE, LLDPE, PP, polyester (e.g. PET or PET) or of polyamide (e.g. PA6, PA66, PA6,10)] or polyacrylonitrile or mixtures thereof and optionally comprise a flame-retardant finish.

22. The use of a hot-melt adhesive composition according to the invention as claimed in one or more of the preceding claims, wherein the fibers additionally comprise a content of non-combustible fibers, such as, for example, carbon, aramid and/or glass fibers.

23. The use of a hot-melt adhesive composition according to the invention as claimed in one or more of the preceding claims, wherein the hot-melt adhesive composition according to the invention comprises further fillers, such as e.g. calcium carbonate, or auxiliary substances, such as e.g. waxes, resins, plasticizers, pigments and antioxidants etc.

## Revendications

1. Masse d'adhésif thermofusible traitée ignifuge, **caractérisée en ce qu'**elle contient les composants suivants :
a) 20 à 70 % en poids d'une ou plusieurs cire (s) de polyoléfine, constituées d'une ou plusieurs α-oléfine(s) en C₃-C₁₈, ainsi qu'éventuellement d'éthylène,
b) 9 à 30% en poids de graphite expansible,
c) 5 à 30% en poids d'un agent retardateur de flamme supplémentaire,
d) 0 à 15% en poids d'un adjuvant à effet antistatique,
e) 0 à 12% en poids d'une ou plusieurs cire(s),
f) 0 à 40% en poids d'une ou plusieurs poly-α-oléfine(s) amorphes atactiques (APAO).

2. Masse d'adhésif thermofusible traitée ignifuge, **caractérisée en ce qu'**elle contient les composants suivants :
a) 40 à 70% en poids d'une ou plusieurs cire (s) de polyoléfine constituées d'une ou plusieurs α-oléfine(s) en C₃-C₁₈ ainsi qu'éventuellement d'éthylène,
b) 9 à 30% en poids de graphite expansible,
c) 5 à 30% en poids d'un agent retardateur de flamme supplémentaire,
d) 0 à 15% en poids d'un adjuvant à effet antistatique,
e) 0 à 12% en poids d'une ou plusieurs résine(s).

3. Masse d'adhésif thermofusible traitée ignifuge selon les revendications 1 et 2, **caractérisée en ce que** la ou les cire (s) de polyoléfine qui y sont contenues est/sont un ou plusieurs homopolymère(s) à base d'éthylène ou de propylène ou un plusieurs copolymère(s) constitués de propylène et de 0,1 à 30% en poids d'éthylène et/ou de 0,1 à 50% en poids d'au moins une α-oléfine en C₄-C₂₀ à chaîne droite ou ramifiée.

4. Masse d'adhésif thermofusible traitée ignifuge selon l'une ou plusieurs des revendications précédentes, **caractérisée en ce que** la ou les cire (s) de polyoléfine qui y sont contenues présentent un point de ramollissement bille/anneau compris entre 40°C et 160°C, de préférence entre 80°C et 140°C, et une viscosité à l'état fondu, mesurée à 170°C, au maximum de 40 000 mPa.s, de préférence au maximum de 20 000 mPa.s.

5. Masse d'adhésif thermofusible traitée ignifuge selon l'une ou plusieurs des revendications précédentes, **caractérisée en ce que** la cire de polyoléfine présente une masse moléculaire moyenne en masse M_{w} comprise entre 1000 et 40 000 g/mole et une masse moléculaire moyenne en nombre Mₙ comprise entre 500 et 25 000 g/mole, ainsi qu'un M_{w}/Mₙ < 5, de préférence < 2,5, d'une manière particulièrement préférée < 1,8.

6. Masse d'adhésif thermofusible traitée ignifuge selon l'une ou plusieurs des revendications précédentes, **caractérisée en ce que** la cire de polyoléfine a été fabriquée à l'aide de catalyseurs métallocènes.

7. Masse d'adhésif thermofusible traitée ignifuge selon les revendications 1 et 2, **caractérisée en ce qu'**elle contient toujours une combinaison synergique de graphite expansible et d'un ou plusieurs agents retardateurs de flamme supplémentaires, selon la combinaison du graphite expansible à l'agent retardateur de flamme (combinaison d'agents retardateurs de flamme) de 1:3 à 3:1, de préférence de 1:1 à 2:1, d'une manière particulièrement préférée de 1:1 à 3:2.

8. Masse d'adhésif thermofusible traitée ignifuge selon les revendications 1, 2 et 7, **caractérisé en ce qu'**elle contient en tant qu'agent retardateur de flamme supplémentaire un ou plusieurs du groupe des agents retardateurs de flamme halogénés et/ou à base d'azote, mais de préférence un ou plusieurs du groupe des agents retardateurs de flamme à base organosphosphorée, d'une manière particulièrement préférée un ou plusieurs du groupe des agents retardateurs de flamme inorganiques.

9. Masse d'adhésif thermofusible traitée ignifuge selon les revendications 1, 2, 7 et 8, **caractérisée en ce qu'**elle contient en tant qu'agent retardateur de flamme un composé NOR-HALS (alcoxyamine à empêchement stérique).

10. Masse d'adhésif thermofusible traitée ignifuge selon les revendications 1 et 2, **caractérisée en ce qu'**elle contient un adjuvant à effet antistatique du groupe des antistatiques conducteurs, choisis en particulier dans le groupe : noir de carbone conducteur, poudre métallique, fils métalliques, filaments métalliques, ainsi que des antistatiques non-conducteurs, ou des composés de l'ammonium quaternaire.

11. Masse d'adhésif thermofusible traitée ignifuge selon les revendications 1 et 2, **caractérisée en ce qu'**elle peut contenir en tant que résine(s) par exemple une ou plusieurs résine(s) de colophane, et leurs dérivés, ou résine(s) hydrocarbonée(s).

12. Masse d'adhésif thermofusible traitée ignifuge selon la revendication 1, **caractérisée en ce qu'**elle contient jusqu'à 40 % en poids d'une ou plusieurs poly-alpha-oléfines atactiques amorphes, ayant un comportement en fusion essentiellement amorphe et une cristallinité inférieure à 30 %, déterminée par ACD (analyse calorimétrique différentielle).

13. Masse d'adhésif thermofusible traitée ignifuge selon les revendications 1 et 2, **caractérisée en ce que** la masse d'adhésif fusible présente un point de ramollissement bille/anneau compris entre 40 et 160°C, de préférence entre 80 et 160°C, et une viscosité à l'état fondu, mesurée à 170°C, comprise entre 5000 et 120 000 mPa.s, de préférence entre 5000 et 80 000 mPa.s, d'une manière particulièrement préférée entre 10 000 et 70 000 mPa.s.

14. Utilisation de la masse d'adhésif thermofusible selon l'invention selon l'une ou plusieurs des revendications précédentes en tant qu'adhésif fusible.

15. Utilisation de la masse d'adhésif thermofusible selon l'invention selon l'une ou plusieurs des revendications précédentes, **caractérisée en ce qu'**elle est appliquée sans utilisation de solvants sous forme d'un mélange fini ("ready to use", prêt à l'emploi) à l'état fondu entre 100 et 180°C, de préférence entre 120 et 170°C, d'une manière particulièrement préférée entre 140 et 160°C.

16. Utilisation de la masse d'adhésif thermofusible selon l'invention selon l'une ou plusieurs des revendications précédentes, en tant qu'adhésif fusible pour le revêtement de l'envers de structures textiles bidimensionnelles.

17. Utilisation de la masse d'adhésif thermofusible selon l'invention selon l'une ou plusieurs des revendications précédentes en tant qu'adhésif fusible pour le revêtement de l'envers de structures textiles bidimensionnelles électriquement chauffées.

18. Utilisation de la masse d'adhésif thermofusible selon l'invention selon l'une ou plusieurs des revendications précédentes en tant qu'adhésif fusible pour le collage de composites textiles électriquement chauffés.

19. Utilisation de la masse d'adhésif thermofusible selon l'invention selon l'une ou plusieurs des revendications précédentes, **caractérisée en ce que**, après apprêtage des structures textiles bidimensionnelles, ces dernières présentent une résistance superficielle ainsi qu'une résistance transversale inférieures à 10¹⁰ Ω, de préférence inférieures à 10⁸ Ω, d'une manière particulièrement préférée inférieures à 10⁶ Ω.

20. Utilisation de la masse d'adhésif thermofusible selon l'invention selon la revendication 16, **caractérisée en ce que** la masse surfacique appliquée de la masse d'adhésif thermofusible est comprise entre 25 et 2000 g/m², de préférence entre 100 et 1000 g/m², d'une manière particulièrement préférée entre 300 et 400 g/m².

21. Utilisation de la masse d'adhésif thermofusible selon l'invention selon la revendication 16 pour apprêter des structures textiles bidimensionnelles, **caractérisée en ce que** les fibres de la structure bidimensionnelle sont constituées de fibres de laine, de coton, de lin, de sisal, de coco et/ou de cellulose, ou de fibres synthétiques combustibles [par exemple PEBD, PEBDL, PP, polyester (p.ex. PET ou PET) ou de polyamide (p.ex. PA6, PA66, PA6,10)] ou de polyacrylonitrile, ou de mélanges de ceux-ci, et contiennent éventuellement un apprêt ignifugeant.

22. Utilisation de la masse d'adhésif thermofusible selon l'invention selon l'une ou plusieurs des revendications précédentes, **caractérisée en ce que** les fibres contiennent en outre une certaine proportion de fibres incombustibles, telles que par exemple des fibres de carbone, d'aramide et/ou de verre.

23. Utilisation de la masse d'adhésif thermofusible selon l'invention selon l'une ou plusieurs des revendications précédentes, **caractérisée en ce que** les masses d'adhésif thermofusible selon l'invention contiennent des charges supplémentaires telles que par exemple du carbonate de calcium, ou des adjuvants tels que par exemple des cires, des résines, des plastifiants, des pigments et des antioxydants.
